Europäisches Patentamt

**European Patent Office**

**Office européen des brevets**

(19)

(11) Veröffentlichungsnummer: **0 013 885**
**B1**

(12) **EUROPÄISCHE PATENTSCHRIFT**

(45) Veröffentlichungstag der Patentschrift:
**29.08.84**

(51) Int. Cl.³: **G 06 F 11/10,** G 11 C 29/00,
**H 03 K** 13/34, H 04 L 1/10

(21) Anmeldenummer: **80100040.7**

(22) Anmeldetag: **04.01.80**

(54) **Verfahren zur Vermeidung von unerwünschten Paritätsfehlersignalen bei der Paritätprüfung eines Registerfeldes und Paritätsprüfeinrichtung zur Durchführung des Verfahrens.**

(30) Priorität: **26.01.79 US 6712**

(43) Veröffentlichungstag der Anmeldung:
**06.08.80 Patentblatt 80/16**

(45) Bekanntmachung des Hinweises auf die Patenterteilung:
**29.08.84 Patentblatt 84/35**

(84) Benannte Vertragsstaaten:
**AT CH DE FR GB**

(56) Entgegenhaltungen:
**DE - A - 2 114 088**
**DE - A - 2 422 971**
**DE - A - 2 554 945**
**DE - A - 2 605 619**
**DE - A - 2 714 314**
**GB - A - 1 523 218**

(73) Patentinhaber: **International Business Machines Corporation, Old Orchard Road, Armonk, N.Y. 10504 (US)**

(72) Erfinder: **Jeremiah, Thomas Leo, 1705 Creekview Drive, Round Rock, Texas 78664 (US)**
Erfinder: **Pezdirtz, Karl Frederick, R.D. 1, Box 375, Vestal, New York 13850 (US)**

(74) Vertreter: **Lewit, Leonard, Dipl.-Ing., Schönaicher Strasse 220, D-7030 Böblingen (DE)**

Beschreibung

In Datenverarbeitungsanlagen werden zumeist eine größere Anzahl von Registern zur Zwischenspeicherung von spezifischen Daten vorgesehen. Dabei kann es sich um Status- oder um Programmunterbrechungs-Informationen handeln sowie um Adressen, Steuerbits, etc. Diese Register können als »externes Registerfeld« bezeichnet werden, da sie nicht auf die gleiche Weise adressiert werden, wie der Hauptspeicher der Anlage. Für Adressierungsüberlegungen können die externen Register als ein Feld von M · N Registern aufgefaßt werden. Bei Adressierung des Feldes wird beispielsweise eine der M Zeilen adressiert, und es werden alle N-Register der Zeile ausgelesen. Am Ausgang des Registerfeldes werden die ausgelesenen Daten zusammengesetzt (assembliert) oder verteilt und dann beispielsweise zur Verarbeitungseinheit der Anlage übertragen. Am Eingang der Verarbeitungseinheit findet eine Überprüfung der Parität der Daten statt, um Fehler im Übertragungsweg der Daten feststellen zu können.

Die Kapazität jedes der Register des externen Registerfeldes kann beispielsweise ein Datenbyte betragen, welches aus acht Datenbits und einem Paritätsbit besteht. Bei der Inbetriebnahme der Anlage kann der Fall auftreten, daß die Verwendung eines oder mehrerer Register entweder nicht geplant oder nicht möglich ist. Die Gründe hierfür können programmtechnischer Natur sein oder auch darin liegen, daß eines oder mehrere Bytes des Feldes defekt oder an die übrige Anlage nicht angeschlossen sind. Solche Bytes können als »leer« bezeichnet werden. Der gespeicherte Inhalt solcher leerer Bytes besteht dann aus lauter binären Nullen. Prüft nun die Paritätsprüfeinrichtung jedes der ausgelesenen Register auf ungerade Parität, würde beim Auslesen eines leeren Registers ein Paritätsfehler angezeigt werden, der evtl. zum Stillstand der Anlage führen könnte.

In der DE-A-1 474 037 ist eine Paritätsprüfeinrichtung beschrieben, welche eine Fehleranzeige bei beabsichtigten zyklischen Verschiebungen der Wortgruppen binärer, miteinander zu verknüpfender Informationsworte vermeidet.

Die US-A-3 986 015 bezieht sich ebenfalls auf die Überprüfung der Parität von binären Daten, die in der Verarbeitungseinheit einer Datenverarbeitungsanlage verarbeitet werden. Da am Ausgang der Verarbeitungseinheit noch eine Korrektur der Daten erfolgen kann, wird in dieser bekannten Einrichtung die Paritätsprüfung nicht an den unkorrigierten, sondern an den bereits korrigierten Daten durchgeführt und somit die Anzeige eines unerwünschten Fehlersignals vermieden.

In der DE-A-2 714 314 ist eine Speichereinrichtung und eine Paritätsprüfeinrichtung beschrieben, in der unter Verwendung gesonderter Adressen entweder Wörter oder ein einzelnes Bit eines gespeicherten Wortes gespeichert oder ausgelesen werden kann. Die Speichereinrichtung besteht aus vielen Speicherblöcken, wobei in jedem Speicherblock jeweils ein Bit eines Wortes gespeichert ist. Die Paritätsbits zu den gespeicherten Datenworten sind in einem eigenen Speicherblock gespeichert. Anstelle des Paritätsbits kann auch unter Verwendung eines besonderen Befehls und der gesonderten Adresse ein Datenbit gespeichert werden. Beim Auslesen der den gesonderten Adressen zugeordneten Einzelbits und der ohne Paritätsbits gespeicherten Wörter muß die vorhandene Paritätsprüfschaltung gesperrt werden, um einen falschen Alarm zu verhindern. Dies hat den Nachteil, daß bei Verwendung der gesonderten Adresse eine erhöhte Fehleranfälligkeit besteht. Außerdem können die Lehren der genannten Schrift nicht auf ein Registerfeld angewandt werden, in dem jeweils eine Vielzahl, z. B. eine Zeile von Registern zugleich adressiert werden und wobei in jedem Register zu den gespeicherten Datenbits bereits ein Paritätsbit mitgespeichert ist.

Der vorliegenden Erfindung liegt daher die Aufgabe zugrunde, ein Verfahren und eine Paritätsprüfeinrichtung zur Vermeidung von unerwünschten Paritätsfehlersignalen bei der Paritätsprüfung eines Registerfeldes der vorliegenden Art anzugeben, das nicht nur Daten und Paritätsbits speichernde Register, sondern auch leere (d. h. ungenutzte, defekte etc.) Register aufweist.

Diese Aufgabe wird durch die in den Ansprüchen 1 und 3 gekennzeichnete Erfindung gelöst. Weiterbildungen der Erfindung sind in den Unteransprüchen gekennzeichnet.

Der Erfindung liegt eine äußerst flexible Paritätsprüfeinrichtung für ein externes Registerfeld zugrunde. Hinsichtlich der Implementierung der Register wird durch die Erfindung die Möglichkeit geschaffen, auch leere Register vorzusehen, d. h. Register, deren Verwendung entweder nicht geplant ist, oder deren Speicherstelle im Registerfeld defekt ist. Es sind auch noch andere Möglichkeiten denkbar, welche zur Implementierung von leeren Registern führen können. Bei einer Modifikation der Register, die in der Anlage nicht unbedingt physisch an einer bestimmten Stelle konzentriert sein müssen, wird durch die Erfindung automatisch die richtige Parität garantiert. Ist während des Betriebes der Anlage der Ausfall eines oder mehrerer Register zu verzeichnen, kann mit einfachen Mitteln ein Paritätsbit für diese leeren Register in der erfindungsgemäßen Verriegelungsschaltungsanordnung gespeichert werden. Dabei braucht die Anlage nicht abgeschaltet zu werden.

Die Paritätsprüfeinrichtung könnte außerdem zur Überprüfung des Paritätsprüfers am Eingang der Verarbeitungseinheit verwendet werden. Durch Speicherung von bestimmten Paritätsbits in den Verriegelungsschaltungen können die Übertragungswege und der Paritätsprüfer gezielt überprüft werden.

Die Erfindung hat auch Vorteile gegenüber einer anderen Möglichkeit, die ungerade Parität erzwungenermaßen herbeizuführen, indem ein 1-Bit in jedes der leeren Bytes gespeichert wird. Diese letztere Möglichkeit hat sich nämlich in der Praxis als zu starr erwiesen, da eine Änderung der Konfiguration der einzelnen Register im Registerfeld — beispielsweise beim Auftreten eines Defekts in einem der Register — hierdurch sehr erschwert wird. Auch die Diagnose gestaltet sich in dem Fall schwieriger als nach der Erfindung, nach der eine äußerst flexible Änderung der Paritätsbits und damit eine sehr wirkungsvolle Testhilfe ermöglicht wird.

Der Aufwand für die erfindungsgemäße Paritätsprüfeinrichtung wird dadurch kleingehalten, daß für die Adressierung der Verriegelungsschaltungsanordnung dieselbe Adressierungseinrichtung, wie für das externe Registerfeld verwendet wird.

Ein Ausführungsbeispiel der Erfindung soll nun anhand der Figuren näher erläutert werden. Es zeigt

Fig. 1 ein Blockschema von Verarbeitungs- und Speicherteilen einer Datenverarbeitungsanlage,

Fig. 2 und 3 in schematischer Form die Anordnung eines Registerfeldes von 8 · 8 externen Registern,

Fig. 4 ein Blockschema des externen Registerfeldes und der beispielsweisen Verriegelungsschaltungsanordnung,

Fig. 5 in einem Zeitdiagramm die Folge von Operationen, die bei der Änderung des Inhaltes eines der externen Register abläuft,

Fig. 6a, 6b, 6c und 6d Darstellungen des jeweiligen Inhalts des nach Fig. 5 veränderten Registers,

Fig. 7 eine Schaltungsanordnung für das Byte 2 der in Fig. 4 gezeigten Paritätsbit-Verriegelungsschaltungsanordnung, und

Fig. 8 eine Schaltungsanordnung für das Byte 3 der in Fig. 4 gezeigten Paritätsbit-Verriegelungsschaltungsanordnung.

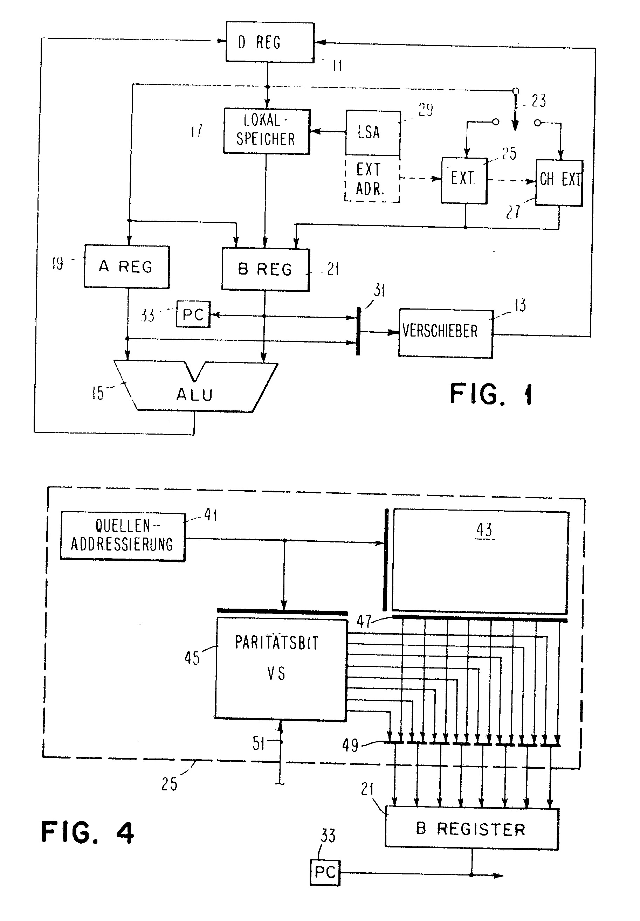

In Fig. 1 ist in Form eines Blockschemas der Teil einer Datenverarbeitungsanlage dargestellt, der die Verarbeitungseinheit mit den direkt damit verbundenen Registern sowie ein externes Registerfeld enthält. Die gezeigte Einrichtung weist ein Bestimmungsregister 11 auf (D-Register), das entweder von einem Byte -Verschieber 13, oder direkt vom Ausgang der Verarbeitungseinheit 15 (ALU) gespeist wird. Der Ausgang des Registers 11 ist mit dem Eingang eines Lokalspeichers 17, mit dem Eingang eines Registers 19 (A-Register), mit dem Eingang eines Registers 21 (B-Register) und mit dem Eingang eines Schalters 23 verbunden. Über den Schalter 23 kann das Register 11 entweder mit einem externen Normal-Registerfeld 25 oder mit einem externen Kanal-Registerfeld 27 verbunden werden. Die Ausgänge der externen Registerfelder 25 und 27 sind mit einem weiteren Eingang des Registers 21 verbunden. Zur Adressierung des Lokalspeichers 17 ist eine Adressierungseinrichtung LSA 29 vorgesehen. Der Ausgang des Lokalspeichers 17 ist mit einem dritten Eingang des Registers 21 verbunden. Die Ausgänge der Register 19 und 21 werden der Verarbeitungseinheit 15 und einer Vereinigungs-Torschaltung 31 zugeführt. Der Ausgang des Registers 21 ist außerdem mit einem Paritätsprüfer 33 verbunden.

Das Bestimmungsregister 11 ist ein Multi-Byte-Register und wirkt als Pufferregister zwischen der Verarbeitungseinheit und den Registern 19 und 21. Außerdem laufen über das Register 11 die Daten von der Verarbeitungseinheit zu den externen Registerfeldern, welche Funktion des Registers 11 im Zusammenhang mit der vorliegenden Erfindung in dieser Beschreibung hauptsächlich angesprochen wird. Das Register 11 kann jedoch in einer vollständigen Datenverarbeitungsanlage noch viele andere Funktionen haben.

Die Verarbeitungseinheit 15 ist ein Multi-Byte-Prozessor und verarbeitet die Multi-Byte-Eingangs-Signale von den Registern 19 und 21. Es soll hier als konkretes Beispiel angenommen werden, daß die Verarbeitungseinheit 15 ein 8-Byte-Prozessor ist und daß die Speicherkapazität jedes der beiden Register 19 und 21 ebenfalls 8-Bytes beträgt. Die Ausgangssignale von der Verarbeitungseinheit 15 werden dem Bestimmungsregister 11 zugeführt, wo sie bis zur weiteren Verwendung zwischengespeichert werden. In der Verarbeitungseinheit 15 werden außerdem Bit- und Byte-Übertragungsbedingungen als Folge von dezimalen Operationen festgestellt. Zustandsbedingungen für Programmverzweigungen, etc. werden vom Mikroprogramm auf der Ausgangssammelleitung der Verarbeitungseinheit 15 festgestellt.

Das Register 19 speist sowohl die Verarbeitungseinheit 15 als auch einen Eingang zur Torschaltung 31. Das Register 19 wird vom Register 11 gesetzt, wenn das Register 19 im gegenwärtigen Mikrowort als Zielregister angegeben ist.

Das 8-Byte-Register 21 speist sowohl die Verarbeitungseinheit 15 als auch einen Eingang der Torschaltung 31. Das Register 21 wird entweder vom Lokalspeicher 17 oder von den externen Registerfeldern 25 und 27, oder vom Bestimmungsregister 11 gespeist. Die externen Registerfelder 25 und 27 sind getrennt adressierbar und können ausgewählte Registerinhalte zum Register 21 bringen. Bei normaler Arbeitsweise wird jeweils ein volles 8-Byte-Wort vom externen Registerfeld ausgelesen.

Der Lokalspeicher 17 enthält unter anderem Allzweckregister, Gleitpunktregister, Register zum Aufbewahren von Programmverzweigungsdaten sowie Register für Kanaldaten. Der Lokalspeicher 17 wird von der Adressierungseinheit 29 adressiert, und Daten werden vom Register 11 in den Lokalspeicher übertragen. Die Ausgangssignale des Lokalspeichers 17 werden immer dem Register 21 zugeführt.

Die Vereinigungstorschaltung 31 enthält Assemblierungslogikschaltungen zur Übertragung von Ausgangsdaten von den Registern 19 und 21.

Vom Mikroprogramm wird jeweils angegeben, ob der Ausgang vom Register 19 oder der Ausgang vom Register 21 zu der Torschaltung 31 durchgeschaltet werden soll.

Der Paritätsprüfer 33 überprüft die Ausgangssignale vom Register 21 und stellt fest, ob diese Ausgangssignale die richtige Parität haben. Im nachfolgend beschriebenen Ausführungsbeispiel soll eine ungerade Parität verwendet werden. Wenn also der Paritätsprüfer 33 eine ungerade Parität nicht feststellt, wird ein Maschinenfehler angezeigt. Mit der vorliegenden Erfindung soll erreicht werden, daß der Paritätsprüfer 33 auch in den weiter unten beschriebenen Spezialfällen eine ungerade Parität für die von den externen Registerfeldern gelieferten Daten anzeigt, womit die Erzeugung eines ungewünschten Fehlersignals vermieden wird.

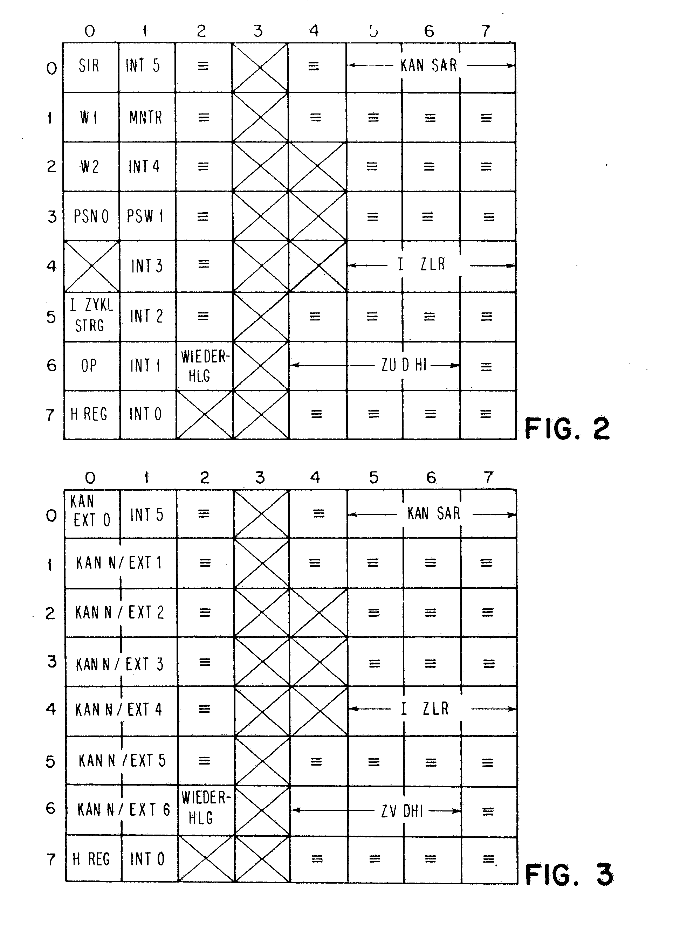

In den Fig. 2 und 3 sind die externen Registerfelder 25 und 27 näher dargestellt. Jedes Feld enthält dabei eine Anordnung von 8 · 8 Registern, wobei jedes dieser 64 Register die Kapazität eines Bytes hat. Ein Byte soll dabei aus einem Paritätsbit und 8 Datenbits bestehen. In der nachfolgenden Beschreibung wird ein Register, d. h. ein bestimmtes Byte jeweils durch die betreffende Zeile und Spalte angegeben. Die Spaltennummer ist dabei identisch mit der Bytenummer innerhalb der betreffenden Zeile. Beispielsweise hat das in Fig. 2 gezeigte Programmstatus-Wortregister PSW1 seinen Platz in Zeile 3, Byte 1. Das Kanalspeicher-Adressenregister befindet sich in Zeile 0, Bytes 5, 6 und 7. In den Fig. 2 und 3 sind verschiedene aus der Praxis gegriffene Speicherinhalte der einzelnen Register mit einer Kurzbezeichnung angegeben (z. B. SIR, INT, W, MNTR, PSN, . . . etc.). Hingewiesen werden soll noch auf das in Zeile 6, Byte 2 vorhandene Register, das Daten zur Wiederholung einer Instruktion speichert und nachfolgend als Wiederholungsregister bezeichnet werden soll.

Die Registerfelder 25 und 27 enthalten auch leere Bytes, d. h. Registerpositionen, in denen keine Daten gespeichert sind. Die zu solchen leeren Bytes gehörenden Fächer sind in den Fig. 2 und 3 mit beiden Diagonalen, d. h. mit einem X ausgefüllt, gezeigt. Beispielsweise stellen in Fig. 2, Zeile 4 die Bytes 0 , 3 und 4 leere Bytes dar. Das Identitätszeichen in manchen Fächern in den Fig. 2 und 3 gibt an, daß die betreffenden Bytes bedeutungslose Daten enthalten.

Im gezeigten Ausführungsbeispiel unterscheidet sich die Fig. 3 von der Fig. 2 nur dadurch, daß die Bytes 0 und 1 aller 8 Zeilen verschieden sind. Dies ist, wie oben bereits gesagt wurde, darauf zurückzuführen, daß das Register 27 ein externes Kanalregisterfeld darstellt, während das externe Registerfeld 25 Normaldaten enthält. In Fig. 3 ist zu beachten, daß das Byte 0 in Zeile 4 nicht leer ist.

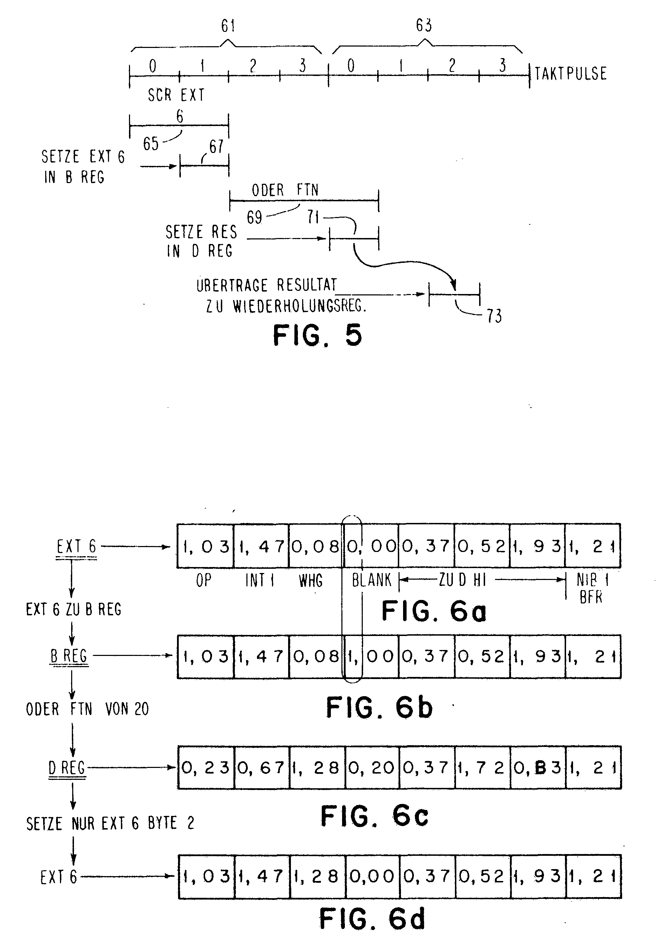

In Fig. 4 ist die Verbindung zwischen den externen Registerfeldern und dem Register 21 näher gezeigt. Das externe Registerfeld 43 in Fig. 4 kann entweder das Normalfeld 25 oder das Kanalfeld 27 darstellen. Nachfolgend soll angenommen werden, daß in Fig. 4 das externe Normalregisterfeld 25 dargestellt ist. Die Adressierung des externen Registerfeldes erfolgt durch eine Quellenadressierungseinrichtung 41, welche gleichzeitig auch eine Paritätsbit-Verriegelungsschaltungsanordnung 45 adressiert. In der Anordnung 45 ist für jedes Byte des externen Registerfeldes eine Verriegelungsschaltung vorgesehen. Die Ausgangssignale vom Registerfeld 43 werden auf die Ausgangssammelleitung 47 ausgelesen, wobei jeweils eine gesamte Zeile des Feldes, d. h. jeweils gleichzeitig 8 Bytes auf die Sammelleitung 47 ausgelesen werden. Jedes der Bytes auf der Sammelleitung 47 gelangt zu einer zugehörigen Torschaltung 49. Ein weiterer Signaleingang der Torschaltungen 49 wird von der Verriegelungsschaltungsanordnung 45 gespeist. Die Ausgänge der Torschaltungen 49 sind mit entsprechenden Eingängen des Registers 21 verbunden. Die am Ausgang des Registers 21 erhaltenden Signale werden von der Einrichtung 33 auf ungerade Parität überprüft.

Die Verriegelungsschaltungsanordnung 45 wird vor der Inbetriebnahme der Anlage vom Mikroprogramm gesetzt. Dabei gelangt über die Leitung 51 ein 1-Bit in jede Verriegelungsschaltung, die einem leeren, ungültigen, defekten, etc. Byte entspricht. Auf diese Weise wird erreicht, daß beim Auslesen einer gesamten Zeile vom Registerfeld 43 auch die Bytes ein Paritätsbit mit dem Wert Eins liefern, die leer sind. Somit wird auch für leere Bytes eine ungerade Parität angezeigt und vom Paritätsprüfer 33 kein Fehlersignal erzeugt. Da von der Quellenadressierungseinrichtung 41 zugleich das Registerfeld 43 und die Verriegelungsschaltungsanordnung 45 adressiert werden, werden die von der Anordnung 45 gelieferten 1-Bits zugleich mit den betreffenden leeren Bytes vom Registerfeld 43 den Torschaltungen 49 zugeführt. Wenn beispielsweise in Fig. 2 die Zeile 4 adressiert wird, würden zugleich mit den Bytes 0, 3 und 4 1-Bits von der Anordnung 45 den Torschaltungen 49 zugeführt werden.

Um die Wirkungsweise des vorliegenden Ausführungsbeispiels näher zu beschreiben, soll nachfolgend ausgeführt werden, wie eine Operation zur Veränderung der Daten im Wiederholungsregister (Zeile 6, Byte 2, Fig. 2, Fig. 3) abläuft. Der zeitliche Ablauf einer solchen Veränderungsoperation ist in Fig. 5 dargestellt. Für die Veränderung sind zwei Systemzyklen 61 und 63 notwendig, die jeweils vier Taktperioden aufweisen. Während der ersten beiden Taktpulse 65 wird zu der ausgewählten Information im externen Registerfeld 43 zugegriffen. Während des zweiten Taktpulses 67 wird die adressierte Information in das Register 21 ausgelesen und während der letzten beiden Taktpulse des ersten Zyklus und des ersten Taktpulses des zweiten Zyklus 69 führt die Verarbeitungseinheit 15 die gewünschte logische Operation an der ausgelesenen Information aus. Während des ersten Taktpulses 71 des zweiten Zyklus 63 wird das Resultat von der Verarbeitungseinheit 15 zum Bestimmungsregister 11 übertragen.

Während des dritten Taktpulses des zweiten Zyklus 73 wird das Resultat zu der adressierten Zeile im externen Registerfeld übertragen.

In den Fig. 6a bis 6d ist die Information aus der Zeile 6, Fig. 2, in den verschiedenen Stadien der Datenänderung gezeigt. In jedem Byteregister stellt die erste Ziffer das Paritätsbit und stellen die nachfolgenden Ziffern jeweils Daten in hexadezimaler Form dar. In Fig. 6a sind die Daten gezeigt, wie sie ursprünglich in Zeile 6 des Registerfeldes 43 gespeichert sind. In Fig. 6b sind die Daten gezeigt, wie sie im Register 21 gespeichert werden. Zu beachten ist, daß im Byte 3 das Paritätsbit von Null auf Eins verändert wurde. Diese Veränderung erfolgte dadurch, daß von der Anordnung 45 das 1-Bit der betreffenden Torschaltung 49 zugeführt wurde. In Fig. 6c ist die Information gezeigt, wie sie am Ausgang der Verarbeitungseinheit 15 erhalten wird. Im vorliegenden Fall führt die Verarbeitungseinheit 15 eine ODER-Funktion der hexadezimalen Zahl 20 mit allen Datenbytes der Information durch. In Fig. 6d ist schließlich die Information gezeigt, wie sie im externen Registerfeld, Zeile 6 abgespeichert wird. Dabei wurde zugleich die Operation »setze nur externes Register 6, Byte 2« ausgeführt. Es wurde also nur das Byte 2, d. h. das Wiederholungsregister verändert, während alle anderen Bytes so gelassen wurden, wie sie vorher in Zeile 6 gespeichert waren.

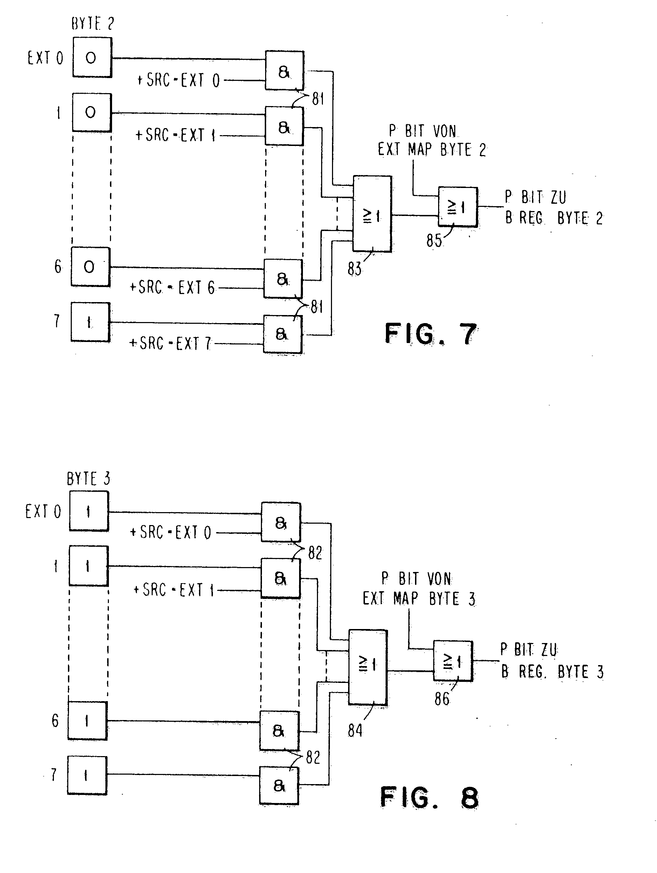

Bezugnehmend auf die Fig. 7 und 8 soll nun das Setzen der zu den Bytes 2 und 3 gehörenden Paritätsbit-Verriegelungsschaltungen in der Anordnung 45 durch das Mikroprogramm anläßlich der Mikroprogramm-Beginnladungsoperation beschrieben werden. Das Laden der Paritätsbit-Verriegelungsschaltungen erfolgt nach folgendem Gesetz: enthält ein Byte im externen Registerfeld Daten, wird ein 0-Bit in die betreffende Verriegelungsschaltung in der Anordnung 45 gespeichert; ist ein Byte im externen Registerfeld jedoch leer (oder defekt etc.), wird ein 1-Bit in der betreffenden Verriegelungsschaltung gespeichert.

Dementsprechend werden für alle Bytes mit der Nummer 2 mit Ausnahme der Zeile 7 0-Bits in den betreffenden Verriegelungsschaltungen gespeichert. Für die Zeile 7, Byte 2, wird jedoch ein 1-Bit in der betreffenden Verriegelungsschaltung gespeichert, da das betreffende Byte leer ist. Die zu den Bytes mit einer bestimmten Nummer gehörenden Verriegelungsschaltungen in der Anordnung 45 sind mit jeweils einem UND-Glied 81 verbunden, wobei jeweils der andere Eingang jedes UND-Gliedes einen Adressierungsimpuls +SRC empfängt. Die Ausgänge der UND-Glieder 81 sind mit jeweils einem Eingang zu einem ODER-Glied 83 verbunden, dessen Ausgang mit dem Eingang eines weiteren ODER-Gliedes 85 verbunden ist. Ein zweiter Eingang zum weiteren ODER-Glied 85 empfängt das Paritätsbit des Byte 2 vom externen Registerfeld 43. Der Ausgang des ODER-Gliedes 85 ist mit einem betreffenden Eingang einer Torschaltung 49 verbunden und ein in der Anordnung 45 gespeichertes 1-Bit gelangt somit in die Paritätsbitstelle des Registers 21.

Da alle Bytes 3 in den Zeilen 0 bis 7 leer sind, sind in den betreffenden Verriegelungsschaltungen in der Anordnung 45 jeweils ein 1-Bit gespeichert, wie in Fig. 8 gezeigt ist. In analoger Weise zu Fig. 7 sind die in Fig. 8 gezeigten Verriegelungsschaltungen mit UND-Gliedern 82 verbunden, deren Ausgänge mit den Eingängen eines ODER-Gliedes 84 verbunden sind, dessen Ausgang wiederum mit dem Eingang eines weiteren ODER-Gliedes 86 verbunden ist.

Beim Zugriff zu einer Zeile im externen Registerfeld 43 wird somit ein 1-Bit in die Paritätsstelle aller jener Bytes gesetzt, die leer sind. Auch für leere Bytes stellt somit der Paritätsprüfer 33 am Ausgang des Registers 21 die korrekte ungerade Parität fest, wodurch eine in diesem Falle unerwünschte Erzeugung eines Fehlersignales vermieden wird.

Es soll nun noch beschrieben werden, in welcher Weise ein 1-Bit in die Bitstelle 2 der an das Paritätsbit angrenzenden hexadezimalen Ziffer im Wiederholungsregister gesetzt wird. Das betreffende Bit soll also von 0 auf 1 verändert werden. Der Wert der beiden hexadezimalen Ziffern in Byte 2, Zeile 6 ist 08, wie aus Fig. 6a hervorgeht. In binärer Form entspricht diese hexadezimale Darstellung der Bitfolge 0000 1000. Von der Verarbeitungseinheit 15 soll nun die hexadezimale Zahl 08 in 28 verändert werden, was der binären Darstellung 0010 1000 entspricht.

Wie aus der Darstellung in Fig. 6a hervorgeht, enthält das Byte 3 nur Nullen, weist also nicht die erforderliche ungerade Parität auf. Vor der Übertragung zum B-Register 21 muß also mit Hilfe der Paritäts-Verriegelungsschaltungsanordnung 45 in der geschilderten Weise ein 1-Bit in die Paritätsstelle des Byte 3, Zeile 6 gesetzt werden, um zu verhindern, daß die falsche Parität angezeigt wird und ein Maschinenfehlersignal erzeugt wird, welches den Stillstand der Anlage zur Folge hätte. Aus Fig. 6a geht zugleich hervor, daß sich in allen anderen Bytes nach Umwandlung der hexadezimalen Zahlen in binäre Zahlen eine ungerade Parität ergibt.

Damit von der Verarbeitungseinheit 15 die angeführte ODER-Operation im Wiederholungsregister (Zeile 6, Byte 2) ausgeführt werden kann, muß im externen Registerfeld 43 die gesamte Zeile 6 ausgelesen werden. Gleichzeitig wird von der Adressierungseinrichtung 41 die Verriegelungsschaltungsanordnung 45 adressiert, und es werden die zu den Bytes der Zeile 6 gehörenden Verriegelungsschaltungen zu den Torschaltungen 49 ausgelesen. Wie aus den Fig. 7 und 8 hervorgeht, ist das Paritätsbit für das Byte 2, Zeile 6 ein 0-Bit und das Paritätsbit für das Byte 3, Zeile 6 ein 1-Bit. Infolgedessen wird über das UND-Glied 81 für das Byte 2, Zeile 6 kein Signal übertragen. Für Byte 3 wird jedoch ein 1-Bit für die Zeile 6 zum betreffenden UND-Glied 82 übertragen. Zum Adressierungszeitpunkt erscheint am zweiten Eingang dieses UND-Gliedes 82 der Adressierungsimpuls + SRC = EXT6. Auf diese Weise gelangt das 1-Bit zum Eingang des ODER-Gliedes 84. Wie aus Fig. 5 hervorgeht, geschieht dies während des ersten Taktpulses 65 des ersten Systemzyklus 61. Wie in Fig. 8 gezeigt ist, gelangt das Paritätsbit mit dem Wert 1 vom ODER-Glied 84 zum ODER-Glied 86 und nach Fig. 4 über die Torschaltung 49 zum betreffenden Eingang des Registers 21. Für Byte 2, Zeile 6, d. h. für das Wiederholungsregister, ist es nicht notwendig, von der Anordnung 45 ein 1-Bit in die Paritätsstelle zu forcieren, da das betreffende Byte bereits ungerade Parität hat. Mit der vorher beschriebenen Arbeitsweise wird erreicht, daß der Paritätsprüfer 33 für alle 8 Bytes der Zeile 6 des externen Registerfeldes 25 (und auch 27) ungerade Parität feststellt. Wie aus Fig. 5 weiter hervorgeht, wird die in Zeile 6 enthaltene Information vom Registerfeld 43 in das Register 21 während des zweiten Taktpulses 67 des ersten Systemzyklus 61 gesetzt. Diese Information hat dann die in Fig. 6b gezeigte Form. Ein Vergleich der beiden Darstellungen in Fig. 6a und 6b zeigt, daß für das leere Byte 3 das Paritätsbit von 0 nunmehr auf 1 verändert wurde und somit bei der Paritätsprüfung kein Fehlersignal ergibt.

Um das Bit 2 in der ersten hexadezimalen Ziffer des Wiederholungsregisters auf 1 zu setzen, führt die Verarbeitungseinheit 15 dann die beschriebene ODER-Funktion mit der hexadezimalen Zahl 20 aus, wobei diese logische Operation mit dem Taktpuls 2 im ersten Systemzyklus beginnt. Die Operation dauert bis zum Ende des Taktpulses 0 des zweiten Systemzyklus 63. Nach der Durchführung der ODER-Operation mit der hexadezimalen Zahl 20 (binär 0010 0000) hat die Information, die in Fig. 6c gezeigte Form. Zu Beginn des 0-Taktpulses 71 des zweiten Systemzyklus 63 gelangt das Resultat von der Verarbeitungseinheit 15 zum Bestimmungsregister 11. Dort hat die Information ebenfalls die in Fig. 6c gezeigte Form. Das Bestimmungsregister 11 wird sodann derart gesteuert, daß nur die dem Wiederholungsregister entsprechende Information, d h. nur das Byte 2 zum externen Registerfeld übertragen wird und dort den bisherigen Inhalt des Byte 2 überschreibt. Nach Durchführung dieser Speicheroperation hat die in Zeile 6 gespeicherte Information die in Fig. 6d gezeigte Form. Insbesondere steht nun im Wiederholungsregister die hexadezimale Zahl 28.

Aus den Fig. 7 und 8 ist ersichtlich, daß die UND-Glieder 81 und 82 nur durchgeschaltet werden, wenn an ihrem zweiten Eingang ein entsprechender Adressierungsimpuls von der Einrichtung 41 anliegt. Wenn z. B. die Zeile 6 im externen Registerfeld 43 adressiert wird, liegt in Fig. 7 an dem der Zeile 6 entsprechenden UND-Glied 81 der Adressierungsimpuls + SRC = EXT6 an. Alle anderen in Fig. 7 gezeigten UND-Glieder 81 werden jedoch nicht durchgeschaltet, so daß auch eventuelle, in den Paritätsbit-Verriegelungsschaltungen gespeicherte 1-Bits nicht zu den ODER-Gliedern 83 und 85 gelangen können.

Das vorgehend beschriebene Ausführungsbeispiel zeigt klar, daß mit der vorliegenden Erfindung eine ganz wesentlich verbesserte Paritätsprüfung eines externen Registerfeldes erreicht wird. Die einzelnen Register des Feldes können nach Bedarf verändert werden, wobei stets die korrekte Parität realisiert werden kann. Wenn außerdem ein Register im externen Registerfeld defekt wird, so daß es sich praktisch wie ein leeres Byte auswirkt, braucht die Einrichtung nicht abgeschaltet zu werden, wenn zumindest das betreffende Register nicht von ganz wesentlicher Bedeutung ist. Es ist nur notwendig, für dieses ausgefallene Register in der Paritätsbits-Verriegelungsschaltungsanordnung ein 1-Bit in der zu dem ausgefallenen Register gehörenden Verriegelungsschaltung vorzusehen. Die Verriegelungsschaltungsanordnung bietet zudem eine vorteilhafte Möglichkeit der Diagnose des Registerfeldes, indem gezielt bestimmte Paritätsbits in die Verriegelungsschaltungen eingespeichert werden können und hierdurch die Arbeitsweise des Paritätsprüfers und der gesamten Übertragungswege überprüft werden kann. Die Erfindung bietet somit wesentliche Vorteile dadurch, daß eine außerordentlich hohe Flexibilität in der Anordnung und Implementierung der externen Register erreicht wird.

## Patentansprüche

1. Verfahren zur Vermeidung von unerwünschten Paritätsfehlersignalen bei der Paritätsprüfung eines aus M Zeilen zu je N Registern bestehenden externen Registerfeldes (43), dessen Register normalerweise zur Speicherung von Daten einschließlich eines Paritätsbits dienen, aber auch leer — lauter binäre Nullen speichernd, defekt oder nicht benützt — sein können und zeilenweise ausgelesen werden mit anschließender Überprüfung des Inhaltes jedes ausgelesenen Registers auf ungerade Parität, dadurch gekennzeichnet,

a) daß dem Registerfeld eine Paritätsbit-Verriegelungsschaltungsanordnung (45) mit je einer weiteren Paritätsbitstelle pro Register zugeordnet ist, in die vor Durchführung der Paritätsprüfung für jedes leere Register eine »1«, ansonsten aber »0« eingeschrieben wird, und

b) daß zur Paritätsprüfung mit der gleichen Adresse eine Zeile des Registerfeldes und der zugeordnete Teil der Paritätsbitverriegelungsschaltungsanordnung ausgelesen wird und im Falle eines »1«-Bits in der einem Register zugeordneten Paritätsbitstelle der Paritätsbitverriegelungsschaltungsanordnung dieses der Paritätsprüfung zugeführt wird.

2. Verfahren nach Anspruch 1, dadurch gekennzeichnet, daß die Bitstellen der Paritätsbitverriegelungsschaltungsanordnung bereits beim ursprünglichen Laden des Mikroprogramms gesetzt werden.

3. Paritätsprüfeinrichtung zur Durchführung des Verfahrens nach Anspruch 1 oder 2, mit einem Paritätsprüfer zur Überprüfung des Inhalts jedes der ausgelesenen Register auf ungerade Parität, gekennzeichnet durch eine zusammen mit dem Registerfeld und mit gleicher Registerfeldzeilenadresse adressierbare Paritätsbitverriegelungsschaltungsanordnung (45) mit einer Verriegelungsschaltung zur Speicherung eines weiteren Paritätsbit zu jedem Register im Registerfeld und dadurch, daß für jedes ausgelesene Register pro Zeile eine von der Verriegelungsschaltungsanordnung und dem Registerfeld gesteuerte Torschaltung (49, Fig. 4) zur Übertragung des zu diesem Register gehörenden Paritätsbit zum Paritätsprüfer (33) vorgesehen ist.

4. Paritätsprüfeinrichtung nach Anspruch 3, dadurch gekennzeichnet, daß die Ausgänge der Torschaltungen (49) mit entsprechenden Eingängen eines Registers (21) verbunden sind, dessen Ausgang sowohl mit dem Paritätsprüfer (33) als auch mit einem Eingang einer Verarbeitungseinheit (15, Fig. 1) verbunden ist.

5. Paritätsprüfeinrichtung nach Anspruch 3, dadurch gekennzeichnet, daß die Ausgänge der jeweils einer bestimmten Spalte des Registerfeldes zugeordneten Verriegelungsschaltungen (EXT 0 bis EXT 7, Fig. 7) jeweils mit einem Eingang eines UND-Gliedes (z. B. 81, Fig. 7) verbunden sind, wobei die Ausgänge dieser UND-Glieder mit entsprechenden Eingängen eines ersten ODER-Gliedes (83) verbunden sind, dessen Ausgang mit einem ersten Eingang eines zweiten ODER-Gliedes (85) verbunden ist, wobei am zweiten Eingang dieses zweiten ODER-Gliedes das im Registerfeld (43) zu jedem Register gespeicherte Paritätsbit zugeführt wird und wobei der Ausgang des zweiten ODER-Gliedes (85) den Paritätsbitausgang der betreffenden Torschaltung (49) darstellt, wobei der zweite Eingang der UND-Glieder (81) von einem Adressierungsimpuls (+ SRC) derart gesteuert wird, daß bei Adressierung einer Registerzeile im Registerfeld (43) nur die zu dieser Registerzeile gehörende Verriegelungsschaltung abgefragt wird.

**Claims**

1. Method of avoiding undesired parity error signals during the parity checking of an external register field (43) consisting of M rows with N registers each, the registers of said field usually serving to store data including a parity bit, but which can also be empty — storing nothing but binary zeros, being disabled or vacant —, and which are read row by row, with a subsequent checking of the contents of each read-out register for an odd parity, characterized in that

a) the register field has an associated parity bit latch arrangement (45) with one respective further parity bit position per register into which prior to the parity check a »1« for each empty register, or otherwise a »0« is read in, and

b) that for the parity check with the same address a row of the register field and the associated part of the parity bit latch arrangement is read out, and if there is a »1« bit in the register-associated parity bit position of the parity bit latch arrangement this is transferred to the parity check.

2. Method as claimed in claim 1, characterized in that the bit positions of the parity bit latch arrangement are set already upon the original loading of the microprogram.

3. Parity check device for carrying out the method as claimed in any one of claims 1 or 2, with a parity checker to check the contents of each of the read-out registers for an odd parity, characterized by a parity bit latch arrangement (45) addressable togheter with the register field and with the same register field row address, with a latch to store a further parity bit for each register in the register field, and in that for each read-out register per row a gate (49, fig. 4) controlled by the latch arrangement and the register field is provided to transfer the parity bit associated to that register to the parity checker (33).

4. Parity check device as claimed in claim 3, characterized in that the outputs of the gates (49) are connected to corresponding inputs of a register (21) whose output is connected with the parity checker as well as with an input of a processing unit (15, fig. 1).

5. Parity check device as claimed in claim 3, characterized int that the outputs of the latches (EXT 0 to EXT 7, fig. 7) respectively associated to a predetermined column of the register field are respectively connected to an input of an AND gate (e. g. 81, fig. 7), the outputs of these AND gates being connected to corresponding inputs of a first OR gate (83) whose output is connected to a first input of a second OR gate (85), the parity bit stored in the register field (43) to each register being applied at the second input of this second OR gate, and the output of the second OR gate (85) representing the parity bit exit of the respective gate (49), with the second input of the OR gates (81) being controlled by an addressing pulse (+ SRC) in such a manner that upon the addressing of a register row in the register field (43) only the latch belonging to this register row is interrogated.

**Revendications**

1. Procéd pour éliminer des signaux d'erreur de parité indésirables au cours d'un test de parité d'une matrice externe (43) de M lignes de respectivement N registres lesquels registres servent normalement à emmagasiner des données avec un bit de parité, mais peuvent tout aussi bien etre vides — soit qu'ils n'emmagasinent que des zéros binaires, soit qu'ils sont défectueux ou bien qu'ils ne sont pas utilisé — et sont lus ligne par ligne, le contenu de chaque registre lu étant immédiatement après soumis à une vérification afin de constater la présence des bits de parité impaire, caractérisé

a) en ce qu'à ladite matrice de registres est associé un dispositif de verrouillage de bit de parité (45) contenant, pour chaque registre, une position de bit de parité supplémentaire, dans laquelle est inscrit un »1« pour chaque registre vide ou dans le cas contraire un »0« avant que soit effectué le controle de parité,

b) en ce qu'aux fins de ce controle de parité, il est procédé au moyen d'une meme adresse à la lecture d'une ligne de ladite matrice de registres et de la partie dudit dispositif de verrouillage qui lui est associée et en ce que dans le cas où la position de bit de parité dans ledit dispositif de verrouillage qui est associé à un registre, contient un »1«, ledit bit est transmis au controle de parité.

2. Procédé selon la revendication 1, caractérisé en ce que lesdites positions de bit dudit dispositif de verrouillage de bit de parité sont programmés dès le chargement initial du microprogramme.

3. Dispositif de controle de parité pour mettre en oeuvre ledit procédé selon la revendication 1 ou 2, comportant un dispositif de controle de parité pour vérifier la parité impaire du contenu de chacun des registres lus, caractérisé par un dispositif de verrouillage (45) adressable en meme temps que la matrice de registres au moyen de la meme adresse, correspondant à une ligne de ladite matrice et comportant une bascule de verrouillage pour emmagasiner un bit de parité supplémentaire pour chaque registre de ladite matrice et en ce qu'il est prévu, pour chacun des registres lus dans une ligne, un circuit de porte (49, fig. 4), commandé par ledit dispositif de verrouillage et par ladite matrice de registres, pour transmettre ledit bit de parité associé à ce registre au dispositif de contrôle de parité (33).

4. Dispositif de controle de parité selon la revendication 3, caractérisé en ce que les sorties des circuits de porte (49) sont reliées avec des entrées correspondantes d'un registre (21) dont la sortie est reliée d'une part avec le dispositif de controle de parité (33) et d'autre part aussi avec une entrée d'une unité de traitement (15, fig. 1).

5. Dispositif de controle de parité selon la revendication 3, caractérisé en ce que les sorties des bascules de verrouillage (EXT 0 à EXT 7, fig. 7) associées respectivement à une colonne déterminée de ladite matrice de registres sont reliées respektivement à une entrée d'un élément ET (tel l'élément 81, fig. 7) les sorties de cet élément ET étant reliées avec des entrées correspondantes d'un premier élément OU (83) dont la sortie est reliée avec une première entrée d'un second élément OU (85), le bit de parité correspondant à chaque registre stocké dans la matrice de registres (43), étant appliqué à une seconde entrée dudit second élément OU et la sortie dudit second élément OU (85) représentant le bit de parité issu dudit circuit de porte respectif (49), la seconde entrée dudit élément ET (81) étant commandé par une impulsion d'adressage (+ SRC) de telle sorte que lors de l'adressage d'une ligne de registres dans ladite matrice de registres (43) seule la bascule de verrouillage qui est associée à cette ligne de registres est désignée.

FIG. 1

FIG. 4

| | 0 | 1 | 2 | 3 | 4 | 5 | 6 | 7 |
|---|---|---|---|---|---|---|---|---|
| 0 | SIR | INT 5 | ≡ | ✕ | ≡ | ← KAN SAR → | | |
| 1 | W1 | MNTR | ≡ | ✕ | ≡ | ≡ | ≡ | ≡ |
| 2 | W2 | INT 4 | ≡ | ✕ | ≡ | ≡ | ≡ | ≡ |
| 3 | PSN 0 | PSW 1 | ≡ | ✕ | | ≡ | ≡ | ≡ |
| 4 | ✕ | INT 3 | ≡ | ✕ | ← I ZLR → | | | |
| 5 | I ZYKL STRG | INT 2 | ≡ | ✕ | ≡ | ≡ | ≡ | ≡ |
| 6 | OP | INT 1 | WIEDER-HLG | ✕ | ← ZU D HI → | | | ≡ |
| 7 | H REG | INT 0 | ✕ | ✕ | ≡ | ≡ | ≡ | ≡ |

**FIG. 2**

| | 0 | 1 | 2 | 3 | 4 | 5 | 6 | 7 |
|---|---|---|---|---|---|---|---|---|
| 0 | KAN EXT 0 | INT 5 | ≡ | ✕ | ≡ | ← KAN SAR → | | |
| 1 | KAN N / EXT 1 | | ≡ | ✕ | ≡ | ≡ | ≡ | ≡ |
| 2 | KAN N / EXT 2 | | ≡ | ✕ | | ≡ | ≡ | ≡ |
| 3 | KAN N / EXT 3 | | ≡ | ✕ | | ≡ | ≡ | ≡ |
| 4 | KAN N / EXT 4 | | ≡ | ✕ | ← I ZLR → | | | |
| 5 | KAN N / EXT 5 | | ≡ | ✕ | ≡ | ≡ | ≡ | ≡ |
| 6 | KAN N / EXT 6 | | WIEDER-HLG | ✕ | ← ZV DHI → | | | ≡ |
| 7 | H REG | INT 0 | ✕ | ✕ | ≡ | ≡ | ≡ | ≡ |

**FIG. 3**

61 63

| 0 | 1 | 2 | 3 | 0 | 1 | 2 | 3 | TAKTPULSE

SCR EXT

6

65 ⌒ 67 ⌒

SETZE EXT 6
IN B REG

ODER FTN

69 ⌒ 71 ⌒

SETZE RES
IN D REG

ÜBERTRAGE RESULTAT
ZU WIEDERHOLUNGSREG. ⌒ 73

## FIG. 5

EXT 6 ⟶

| 1, 0 3 | 1, 4 7 | 0, 0 8 | 0, 0 0 | 0, 3 7 | 0, 5 2 | 1, 9 3 | 1, 2 1 |

OP    INT 1    WHG    BLANK |← ZU D HI →| NIB 1
BFR

## FIG. 6a

EXT 6 ZU B REG

B REG ⟶

| 1, 0 3 | 1, 4 7 | 0, 0 8 | 1, 0 0 | 0, 3 7 | 0, 5 2 | 1, 9 3 | 1, 2 1 |

## FIG. 6b

ODER FTN VON 20

D REG ⟶

| 0, 2 3 | 0, 6 7 | 1, 2 8 | 0, 2 0 | 0, 3 7 | 1, 7 2 | 0, B 3 | 1, 2 1 |

## FIG. 6c

SETZE NUR EXT 6 BYTE 2

EXT 6 ⟶

| 1, 0 3 | 1, 4 7 | 1, 2 8 | 0, 0 0 | 0, 3 7 | 0, 5 2 | 1, 9 3 | 1, 2 1 |

## FIG. 6d

FIG. 7

FIG. 8